# EUROPÄISCHE PATENTANMELDUNG

(11) **EP 3 712 721 A1**
(43) Veröffentlichungstag der Anmeldung: **23.09.2020**
(21) Anmeldenummer: 19163776.8
(22) Anmeldetag: 19.03.2019
(51) Int. Cl.: G05B 19/042, G05B 23/02, H04L 12/24

(54) **SICHERHEITSRELEVANTE DIAGNOSEMELDUNGEN**

(71) Anmelder: Siemens Aktiengesellschaft, 80333 München (DE)
(72) Erfinder: Lutz, Benjamin, 76327 Pfinztal (DE); Palmin, Anna, 76187 Karlsruhe (DE)

(57) **Zusammenfassung**

Vorgeschlagen wird ein Operator Station Server (2) eines Leitsystems (1) einer technischen Anlage, insbesondere Fertigungs- oder Prozessanlage, der einen computerimplementierten Analysebaustein (11), einen computerimplementierten Anpassungsbaustein (12) und einen computerimplementierten Sicherheitsbaustein (15) umfasst,
wobei der computerimplementierte Analysebaustein (11) dazu ausgebildet und vorgesehen ist, Diagnosemeldungen zu empfangen, die von technischen Objekten (7) einer technischen Anlage, insbesondere einer Fertigungs- oder Prozessanlage, erzeugt worden sind, und die Diagnosemeldungen dahingehend zu analysieren, dass für eine Sicherheit eines Betriebs der technischen Anlage relevante Diagnosemeldungen identifiziert werden,
und wobei der computerimplementierte Analysebaustein (11) dazu ausgebildet und vorgesehen ist, die zuvor als relevant identifizierten Diagnosemeldungen an den computerimplementierten Anpassungsbaustein (12) weiterzuleiten,
und wobei der computerimplementierte Anpassungsbaustein (12) dazu ausgebildet und vorgesehen ist, für den Fall, dass dies notwendig ist, die zuvor von dem computerimplementierten Analysebaustein (11) als relevant identifizierten Diagnosemeldungen an Anforderungen des computerimplementierten Sicherheitsbausteins (15) anzupassen,
und wobei der computerimplementierte Anpassungsbaustein (12) dazu ausgebildet und vorgesehen ist, die zuvor von dem computerimplementierten Analysebaustein (11) empfangenen Diagnosemeldungen an den computerimplementierten Sicherheitsbaustein (15) weiterzuleiten.

## Beschreibung

Die Erfindung betrifft ein Verfahren mit den Merkmalen des Anspruchs 1. Außerdem betrifft die Erfindung ein Leitsystem für eine technische Anlage, insbesondere eine Fertigungs- oder Prozessanlage gemäß Anspruch 6. Zudem betrifft die Erfindung einen Operator Station Server eines Leitsystems einer technischen Anlage, insbesondere Fertigungs- oder Prozessanlage, gemäß Anspruch 7.

Einen besonderen Stellenwert nimmt im Hinblick auf das steigende Bedrohungspotenzial technischer Anlagen eine proaktive Erkennung von Hinweisen auf mögliche Angriffe, Anomalien und Richtlinienverletzungen, sowie die langfristige Speicherung von Security-relevanten Informationen mit Hilfe adäquater Werkzeuge ein. Eine derartige proaktive Erkennung und die Rückverfolgbarkeit auf Basis der langfristigen Speicherung von Security relevanten Informationen wird gerade für die Betreiber kritischer Anlageninfrastrukturen noch wichtiger als zuvor.

Die sogenannte Security Information Event Management (SIEM) Werkzeuge zur Erfassung, Korrelation und langfristigen Speicherung der sogenannten Security Events sowie zur Generierung von Alarmen auf Basis der Korrelationsergebnisse ermöglichen eine wesentliche Erhöhung des Schutzniveaus von Komponenten, Systemen und Anlagen und tragen zur Konformität mit den Anforderungen der relevanten Standards bei. Entsprechende Anforderungen sind beispielsweise in der Norm IEC 62443-3-3 formuliert.

Eine wichtige Voraussetzung für einen nutz- und erfolgsbringenden Einsatz derartiger Werkzeuge besteht darin, dass die in den industriellen Anlagen eingesetzten Komponenten und Systeme diverse Security Events erfassen und über standardisierte Schnittstellen bereitstellen können.

Beispielsweise unterstützt der Industrial Controller SIMATIC S7 410 von SIEMENS die in der IEC 62443-3-3 erläuterten Security-Events. Die Security-Events können dabei von einer CPU des Controllers in sogenannten Syslog-Telegrammen an bis zu vier externe SIEM-Server gesendet werden.

Eine weitere wichtige Voraussetzung bildet das Vorhandensein von auf die jeweilige technische Anlage zugeschnittenen Korrelationsregeln zur Erkennung von Hinweisen auf diverse Angriffsszenarien und Verletzungen von obligatorischen Richtlinien. Derartige Regeln können in verschiedene allgemeine, normspezifische, industriespezifische, IT-spezifische, herstellerspezifische und anlagenspezifische Kategorien unterteilt werden.

Bei der Erprobung diverser SIEM-Werkzeuge und Anomalieerkennungswerkzeuge im industriellen Umfeld wurden in den letzten Jahren wurden folgende Erkenntnisse gewonnen:
Security-Events und erkannte netzwerktechnische Anomalien sind zwar wichtig, jedoch für die umfassende Erkennung von Angriffen (insbesondere den sogenannten "Sophisticated Attacks", die gezielt Schwachstellen in einer bestimmten Umgebung ausnutzen) und Abweichungen unter Umständen nicht ausreichend. Im Falle von Security-Events liegt dies insbesondere daran, dass sie vom Geräte-/Software oder Systemhersteller in der Design-Phase definiert wurden, wobei nicht alle Szenarien, die sich beim späteren Einsatz in einer technischen Anlage als möglich herausgestellt haben, in der Design-Phase bekannt bzw. vorhersehbar waren.

Im Falle von Anomalieerkennungswerkzeugen liegt dies daran, dass sie entweder bereits bekannte Netzwerkangriffe (wie z.B. IP-Spoofing) erkennen oder über längere Phasen das Normalverhalten des Systems lernen müssen und anschließend nur schätzen können, dass es ggf. eine Abweichung vom Normalverhalten vorliegt, wobei sie die Informationen aus den Geräten (wie z.B. Security Events) völlig vernachlässigen.

Für eine umfassende und auf die jeweilige technische Anlage möglichst gut zugeschnittene Security-Diagnose und Angriffserkennung sollten auch weitere Informationen, insbesondere von diversen Gerätekomponenten, u.a. Operator Station Servern, Automatisierungen und Feldgeräten, erfassten System- und Gerätediagnosemeldungen), die zwar nicht per Definition sicherheitsrelevant sind, sich jedoch im konkreten Anlagenkontext als sicherheitsrelevant erweisen können, berücksichtigt werden.

In einem Operator Station Server laufen beispielsweise sämtliche Gerätediagnosemeldungen des Operator Station Servers und der entlang der Automatisierungspyramide untergelagerten Geräte der Automatisierungs- und Feldebene der technischen Anlage zusammen.

Die Feldgeräte melden ihre Diagnosedaten als Gerätediagnosemeldungen an die zugeordneten Automatisierungen. Die Netzwerkgeräte melden ihre Diagnosedaten als Gerätediagnosemeldungen den zugeordneten Automatisierungen. Die Automatisierungen aggregieren ihre eigenen Gerätediagnosemeldungen zusammen mit den Gerätediagnosemeldungen der Feldgeräte und Netzwerkgräte und melden diese dem Operator Station Server. Der Operator Station Sever aggregiert seine Diagnosedaten mit seinen Gerätediagnosemeldungen und den aggregierten Gerätediagnosemeldungen der Automatisierungen und meldet diese einer Maintenance Station.

Für jede Teil-Anlage liegen also bereits sämtliche Gerätediagnosemeldungen auf der Ebene des Operator Station Servers vor, die für "Security-Analysen" Relevanz haben könnten.

Gerätediagnosemeldungen sind dabei Meldungen (wie Prozessalarme), die neben Meldetexten auch zahlreiche Begleitwerte beinhalten, und primär für Wartungsaufgaben ausgelegt sind. Aufgrund der Vielzahl in einem Leisystem einer technischen Anlage enthaltenen Geräte und der pro Gerät vielzählig vorhandenen Diagnosemeldungen sind je Operator Station Server große Mengen an Diagnosemeldungen vorhanden. Obwohl es technisch möglich ist, u.a. die gesamten erfassten Gerätediagnosemeldungen durch ein SIEM-System auswerten zu lassen, ist es nicht zielführend, da nicht jede Diagnosemeldung im konkreten Anlagenkontext sicherheitsrelevant ist. Außerdem ist nicht jede Diagnosemeldung für eine Security-Analyse geeignet.

Für ein SIEM-System, das vor Ort in einer technischen Anlage installiert ist, ist in der Regel ein IT-Experte zuständig. Ein derartiger Experte kennt sich in der Regel nicht (bzw. nicht im Detail) mit den in der Anlage installierten Automatisierungskomponenten und deren Diagnosemeldungen und Security-Events aus. Somit kann der IT-Experte nur unzureichend (bzw. nicht ohne Unterstützung des Anlagenpersonals bzw. von Automatisierungsexperten) die für die Anomalieerkennung notwendigen Korrelationsregeln erstellen und diese optimal für die jeweilige technische Anlage anpassen.

Das Anlagenpersonal ist jedoch in der Regel schwerpunktmäßig mit Aufgaben zwecks der Aufrechterhaltung des Betriebs und der Verfügbarkeit der Anlage beschäftigt, so dass die gemeinsame Erarbeitung von notwendigen Korrelationsregeln entweder nur in einem sehr kleinen Umfang oder gar nicht erfolgt. Als Resultat gelangt eine große, unüberschaubare Menge an verschiedene Informationen (u.a. diverse Gerätediagnosemeldungen) in die SIEM-Systeme.

Durch die vollautomatisierte Echtzeitauswertung dieser Informationen anhand bestimmter IT- bzw. netzwerkorientierter, zum Teil sehr allgemein gehaltener Korrelations- bzw. Erkennungsregeln können zwar Standardangriffe (wie z.B. Denial of Service, IP Spoofing), jedoch keine gezielten, anlagenspezifischen Angriffe erkannt werden. Es ist bisher keine Möglichkeit bekannt, im Rahmen einer vollautomatisierten Auswertung die entsprechenden Automatisierungs- bzw. Anlagenexperten bei der Bewertung bestimmter Gerätediagnosemeldungen im Hinblick auf ihre Security-Relevanz im Bedarfsfall miteinzubeziehen. Der Erfindung liegt die Aufgabe zugrunde, eine effizientere Alarmbehandlung durch ein Leitsystem einer technischen Anlage unter sicherheitstechnischen Gesichtspunkten anzugeben.

Diese Aufgabe wird gelöst durch ein Verfahren mit den Merkmalen des Anspruchs 1. Außerdem wird die Aufgabe gelöst durch ein Leitsystem für eine technische Anlage, insbesondere eine Fertigungs- oder Prozessanlage, gemäß Anspruch 6. Zudem wird die Aufgabe gelöst durch einen Operator Station Server eines Leitsystems einer technischen Anlage, insbesondere Fertigungs- oder Prozessanlage, gemäß Anspruch 7. Vorteilhafte Weiterbildungen ergeben sich aus den abhängigen Ansprüchen.

Ein Verfahren eingangs beschriebener Art umfasst erfindungsgemäß folgende Schritte:
a) Empfangen von Diagnosemeldungen, die von Objekten einer technischen Anlage, insbesondere einer Fertigungs- oder Prozessanlage, erzeugt worden sind;
b) Analysieren der Diagnosemeldungen, dahingehend, dass für eine Sicherheit eines Betriebs der technischen Anlage relevante Diagnosemeldungen identifiziert werden;
c) Für den Fall, dass dies notwendig ist, Anpassen der zuvor identifizierten Diagnosemeldungen an Anforderungen eines computerimplementierten Sicherheitsbausteins der technischen Anlage;
d) Übertragen der zuvor identifizierten und gegebenenfalls angepassten Diagnosemeldungen an den computerimplementierten Sicherheitsbaustein der technischen Anlage.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Bei einem technischen Objekt kann es sich um einzelne Sensoren oder Aktoren der technischen Anlage handeln. Ein technisches Objekt kann aber auch ein Zusammenschluss mehrerer Sensoren und/oder Aktoren sein, beispielsweise ein Motor, ein Reaktor, eine Pumpe oder ein Ventilsystem.

Unter einer Meldung wird allgemein ein Bericht vom Eintreten eines Ereignisses verstanden, das einen Übergang aus einem diskreten Zustand innerhalb der technischen Anlage in einen anderen diskreten Zustand darstellt. Diagnosemeldungen stellten eine spezielle Art von Meldungen dar und umfassen neben den eigentlichen Meldetexten weitere Begleitwerte. Die Diagnosemeldungen (auch als Gerätediagnosemeldungen bezeichnet) sind primär für in der technischen Anlage bezogen auf die jeweiligen technischen Objekte anfallende Wartungsaufgaben ausgelegt.

Erfindungsgemäß werden zunächst Diagnosemeldungen von technischen Objekten einer technischen Anlage empfangen und anschließend analysiert. Dabei wird auf Vergleichsdatensätze zurückgegriffen, die eine Identifizierung von für eine Sicherheit eines Betriebs der technischen Anlage relevanten Diagnosemeldungen ermöglichen. Mit anderen Worten wird anhand vorbekannter Datenmuster eine Klassifizierung der empfangenen Diagnosemeldungen in sicherheitsrelevante oder -irrelevante Meldungen vorgenommen.

Für den Fall, dass dies notwendig sein sollte, werden die Diagnosemeldungen anschließend einer Transformation unterzogen, um sie an die Anforderungen eines computerimplementierten Sicherheitsbausteins anzupassen. Eine solche Anforderung kann beispielsweise in einem Inhalt und einer Struktur der in der IEC 62443-3-3 Norm erläuterten sogenannten Auditable Events, die auch als Security-Events bezeichnet werden, bestehen. Die Anpassung bzw. Transformation der zuvor als relevant identifizierten Diagnosemeldungen erfolgt dann im Bedarfsfall anhand der in der Norm IEC 62443-3-3 festgeschriebenen Inhaltsvorgaben.

Die zuvor identifizierten und gegebenenfalls angepassten Diagnosemeldungen werden schließlich an den computerimplementierten Sicherheitsbaustein der technischen Anlage übergeben. Ein solcher Sicherheitsbaustein kann beispielsweise ein SIEM-System sein.

Durch die Filterung der Diagnosemeldungen (und ggf. Anpassung) kann die Anzahl an nachfolgende Security-Analyse-Tools (bzw. den Sicherheitsbaustein) weitergeleiteten Informationen in großem Umfang reduziert werden. Ihr Informationsgehalt und Nutzen im Hinblick auf eine Angriffserkennung auf die technische Anlage wird jedoch deutlich erhöht.

Bei einer vorteilhaften Weiterbildung der Erfindung werden die an den computerimplementierten Sicherheitsbaustein übertragenen Diagnosemeldungen einem Operator der technischen Anlage grafisch dargeboten. Dadurch erhält der Operator eine übersichtliche Abbildung des sicherheitstechnisch relevanten Status der technischen Anlage.

Unter einem Operator wird ein menschlicher Bediener der technischen Anlage verstanden. Der Operator interagiert mittels spezieller Benutzerschnittstellen mit der technischen Anlage bzw. dessen Leitsystem und steuert spezielle technische Funktionen der Anlage. Hierzu kann der Operator ein Bedien- und Beobachtungssystem des Leitsystems nutzen.

Bevorzugt wird im Rahmen der Analyse der Diagnosemeldungen zur Beurteilung der Sicherheitsrelevanz der Diagnosemeldungen auf ein maschinelles Lernnetzwerk, insbesondere ein neuronales Netz, zurückgegriffen, das zuvor mit Analysedaten bezüglich früherer Diagnosemeldungen trainiert worden ist. Dieses maschinelle Lernnetzwerk kann durch spezielle Eingaben von Operatoren der technischen Anlage trainiert worden sein, die zurückliegende Diagnosemeldungen hinsichtlich deren sicherheitstechnische Relevanz beurteilt haben.

Es ist möglich, dass das maschinelle Lernnetzwerk durch weitere Beurteilungen von Operatoren noch besser trainiert wird, um das Lernnetzwerk beispielsweise an sich ändernde Sicherheits-Rahmenbedingungen anzupassen.

Bei der automatisierten Beurteilung der Sicherheitsrelevanz einer Diagnosemeldung können eine Meldeklasse und/oder eine Meldeart der Diagnosemeldung berücksichtigt werden. Meldeklassen sind beispielsweise: "Automatisierungsstation Leittechnik-Meldungen", Operator Station Server Leittechnik-Meldungen", "Bedienmeldungen" oder "Prozessmeldungen". Eine Meldeart können beispielsweise "Alarm" oder "Störung" darstellen. Hintergrund ist, dass einzelne Diagnosemeldungen in der Regel einzelnen Meldeklassen und Meldearten zugeordnet sind, wodurch sich die zuvor erläuterte Klassifizierung deutlich erleichtern lässt.

Im Rahmen einer bevorzugten Weiterbildung des Verfahrens werden die zuvor als relevant identifizierten Diagnosemeldungen an ein Standarddatenformat, vorzugsweise das Common Event Format, angepasst, bevor die Diagnosemeldungen an den computerimplementierten Sicherheitsbaustein der technischen Anlage übertragen werden.

Die oben formulierte Aufgabe wird zudem gelöst durch ein Leitsystem für eine technische Anlage, insbesondere eine Fertigungs- oder Prozessanlage, das dazu ausgebildet und vorgesehen ist, ein Verfahren wie zuvor erläutert durchzuführen.

Außerdem wird die obige Aufgabe gelöst durch einen Operator Station Server eines Leitsystems einer technischen Anlage, insbesondere Fertigungs- oder Prozessanlage, der einen computerimplementierten Analysebaustein, einen computerimplementierten Anpassungsbaustein und einen computerimplementierten Sicherheitsbaustein umfasst. Dabei ist der computerimplementierte Analysebaustein dazu ausgebildet und vorgesehen ist, Diagnosemeldungen zu empfangen, die von technischen Objekten einer technischen Anlage, insbesondere einer Fertigungs- oder Prozessanlage, erzeugt worden sind, und die Diagnosemeldungen dahingehend zu analysieren, dass für eine Sicherheit eines Betriebs der technischen Anlage relevante Diagnosemeldungen identifiziert werden. Zudem ist der computerimplementierte Analysebaustein dazu ausgebildet und vorgesehen, die zuvor als relevant identifizierten Diagnosemeldungen an den computerimplementierten Anpassungsbaustein weiterzuleiten. Der computerimplementierte Anpassungsbaustein ist dazu ausgebildet und vorgesehen, für den Fall, dass dies notwendig ist, die zuvor von dem computerimplementierten Analysebaustein als relevant identifizierten Diagnosemeldungen an Anforderungen des computerimplementierten Sicherheitsbausteins anzupassen. Zudem ist der computerimplementierte Anpassungsbaustein dazu ausgebildet und vorgesehen, die zuvor von dem computerimplementierten Analysebaustein empfangenen Diagnosemeldungen an den computerimplementierten Sicherheitsbaustein weiterzuleiten.

Unter einem "Operator Station Server" wird vorliegend ein Server verstanden, der zentral Daten eines Bedien- und Beobachtungssystems sowie in der Regel Alarm- und Messwertarchive eines Prozessleitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage an sogenannte Clients weiter, die zur Bedienung und Beobachtung eines Betriebs der einzelnen Funktionselemente der technischen Anlage dienen. Bei dem Operator Station Server kann es sich, ohne sich darauf zu beschränken, um einen SIMATIC PCS 7 Industrial Workstation Server von SIEMENS handeln.

Besonders bevorzugt weist der Operator Station Server einen Operator Station Client auf, der dazu ausgebildet und vorgesehen ist, Diagnosemeldungen von dem Operator Station Server zu empfangen und diese einem Operator der technischen Anlage darzubieten.

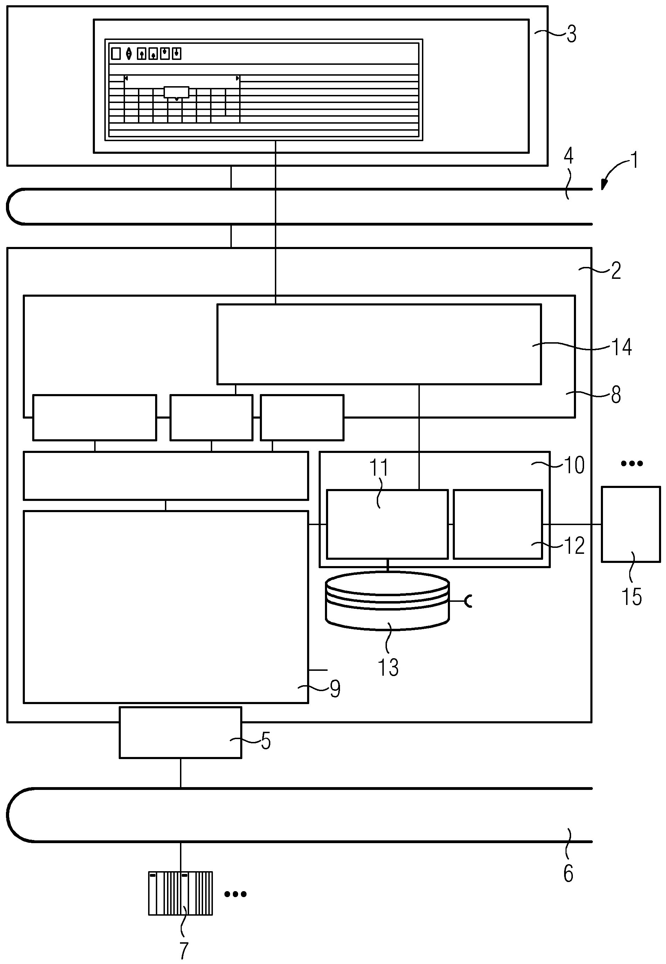

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

In der Figur ist ein Teil eines erfindungsgemäßen Leitsystems 1 einer als verfahrenstechnische Anlage ausgebildeten technischen Anlage dargestellt. Das Leitsystem 1 umfasst einen Server eines Bediensystems bzw. einen Operator Station Server 2 und einen dazugehörigen Operator Station Client 3. Der Operator Station Server 2 und der Operator Station Client 3 sind über einen Terminalbus 4 miteinander und mit nicht dargestellten weiteren Komponenten des Leitsystems 1 wie einem Engineering System Server oder einem Prozessdatenarchiv verbunden.

Ein Benutzer bzw. Operator hat mittels des Operator Station Servers 3 mittels des Terminalbus 4 im Kontext eines Bedienens und Beobachtens Zugriff auf den Operator Station Server 2. Der Terminalbus 4 kann, ohne sich darauf zu beschränken, beispielsweise als Industrial Ethernet ausgebildet sein.

Der Operator Station Server 2 weist eine Geräteschnittstelle 5 auf, die mit einem Anlagenbus 6 verbunden ist. Hierüber kann der Operator Station Server 2 mit einem (externen) Gerät 7 kommunizieren. Bei dem angeschlossenen Gerät 7 kann es sich dabei alternativ auch um eine Applikation, insbesondere Webapplikation, handeln. Im Rahmen der Erfindung kann eine beliebige Zahl an Geräten und/oder Applikationen an den Operator Station Server 2 angeschlossen sein. Der Anlagenbus 6 kann, ohne sich darauf zu beschränken, beispielsweise als Industrial Ethernet ausgebildet sein. Das Gerät 7 kann wiederum mit einer beliebigen Anzahl an Subsystemen (nicht dargestellt) verbunden sein.

In dem Operator Station Server 2 ist ein Visualisierungsdienst 8 integriert, über den eine Übertragung von (Visualisierungs-)Daten an den Operator Station Client 3 erfolgen kann. Zudem weist der Operator Station Server 4 ein Prozessabbild (Process Image) 9 und einen Alarmdienst 10 auf. Der Alarmdienst 10 wiederum umfasst einen computerimplementierten Analysebaustein 11 und einen computerimplementierten Anpassungsbaustein 12.

Der Alarmdienst 10 greift auf das Prozessabbild 9 zu, um Diagnosemeldungen der einzelnen Geräte 7 zu erhalten. Die empfangenen Diagnosemeldungen werden zunächst von dem computerimplementierten Analysebaustein 11 dahingehend analysiert, dass für eine Sicherheit eines Betriebs der technischen Anlage relevante Diagnosemeldungen identifiziert werden. Hierzu greift der computerimplementierte Analysebaustein 11 auf eine Datenbank 13 zu, in der ein Regeln zur Klassifizierung der einzelnen Diagnosemeldungen in Hinblick auf eine Betriebssicherheit der technischen Anlage hinterlegt sind.

Für den Fall, dass dies notwendig ist, passt der computerimplementierte Anpassungsbaustein 12 die zuvor als relevant identifizierte Diagnosemeldung an bestimmte Vorgaben wie z.B. dem Common Event Format an.

Die als relevant identifizierten und ggf. transformierten Diagnosemeldungen werden anschließend an eine Meldefolgeanzeige (engl. Alarm Control) 14 des Leitsystems 1 übertragen. Die entsprechenden Bedienbilder der Meldefolgeanzeige 14 werden einem Operator des Leitsystems 1 grafisch auf dem Operator Station Client 3 dargeboten. Zudem werden die als genannten Diagnosemeldungen an einen als SIEM-System ausgebildeten computerimplementierten Sicherheitsbaustein 15 zur weiteren Verarbeitung übertragen.

Wird eine neue und unbekannte Diagnosemeldungsart empfangen, überträgt der Alarmdienst 10 mittels der Meldefolgeanzeige 14 dem Operator die Information, dass eine neue Regel in der Datenbank 13 hinterlegt werden muss, um zukünftig mit dieser Diagnosemeldeart korrekt verfahren zu können.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren, umfassend:
a) Empfangen von Diagnosemeldungen, die von technischen Objekten (7) einer technischen Anlage, insbesondere einer Fertigungs- oder Prozessanlage, erzeugt worden sind;
b) Analysieren der Diagnosemeldungen, dahingehend, dass für eine Sicherheit eines Betriebs der technischen Anlage relevante Diagnosemeldungen mittels Vergleichsdatensätzen identifiziert werden;
c) Für den Fall, dass dies notwendig ist, Anpassen der zuvor identifizierten Diagnosemeldungen an Anforderungen eines computerimplementierten Sicherheitsbausteins (15) der technischen Anlage;
d) Übertragen der zuvor identifizierten und gegebenenfalls angepassten Diagnosemeldungen an den computerimplementierten Sicherheitsbaustein (15) der technischen Anlage.

2. Verfahren nach Anspruch 1, bei dem die an den computerimplementierten Sicherheitsbaustein (15) übertragenen Diagnosemeldungen einem Operator der technischen Anlage grafisch dargeboten werden.

3. Verfahren nach Anspruch 1 oder 2, bei dem im Rahmen der Analyse der Diagnosemeldungen zur Beurteilung der Sicherheitsrelevanz der Diagnosemeldungen auf ein maschinelles Lernnetzwerk, insbesondere ein neuronales Netz, zurückgegriffen wird, das zuvor mit Analysedaten bezüglich früherer Diagnosemeldungen trainiert worden ist.

4. Verfahren nach einem der vorangegangenen Ansprüche, bei dem bei der automatisierten Beurteilung der Sicherheitsrelevanz einer Diagnosemeldung eine Meldeklasse und/oder eine Meldeart der Diagnosemeldung berücksichtigt wird.

5. Verfahren nach einem der vorangegangenen Ansprüche, bei dem die zuvor als relevant identifizierten Diagnosemeldungen an ein Standarddatenformat, vorzugsweise das Common Event Format, angepasst werden, bevor die Diagnosemeldungen an den computerimplementierten Sicherheitsbaustein (15) der technischen Anlage übertragen werden.

6. Leitsystem (1) für eine technische Anlage, insbesondere eine Fertigungs- oder Prozessanlage, das dazu ausgebildet und vorgesehen ist, ein Verfahren gemäß einem der Ansprüche 1 bis 5 durchzuführen.

7. Operator Station Server (2) eines Leitsystems (1) einer technischen Anlage, insbesondere Fertigungs- oder Prozessanlage, der einen computerimplementierten Analysebaustein (11), einen computerimplementierten Anpassungsbaustein (12) und einen computerimplementierten Sicherheitsbaustein (15) umfasst, wobei der computerimplementierte Analysebaustein (11) dazu ausgebildet und vorgesehen ist,
Diagnosemeldungen zu empfangen, die von technischen Objekten (7) einer technischen Anlage, insbesondere einer Fertigungs- oder Prozessanlage, erzeugt worden sind, und die Diagnosemeldungen dahingehend zu analysieren, dass für eine Sicherheit eines Betriebs der technischen Anlage relevante Diagnosemeldungen identifiziert werden,
und wobei der computerimplementierte Analysebaustein (11) dazu ausgebildet und vorgesehen ist, die zuvor als relevant identifizierten Diagnosemeldungen an den computerimplementierten Anpassungsbaustein (12) weiterzuleiten,
und wobei der computerimplementierte Anpassungsbaustein (12) dazu ausgebildet und vorgesehen ist, für den Fall, dass dies notwendig ist, die zuvor von dem computerimplementierten Analysebaustein (11) als relevant identifizierten Diagnosemeldungen an Anforderungen des computerimplementierten Sicherheitsbausteins (15) anzupassen,
und wobei der computerimplementierte Anpassungsbaustein (12) dazu ausgebildet und vorgesehen ist, die zuvor von dem computerimplementierten Analysebaustein (11) empfangenen Diagnosemeldungen an den computerimplementierten Sicherheitsbaustein (15) weiterzuleiten.

8. Operator Station Server (2) gemäß Anspruch 7 mit einem Operator Station Client (3), der dazu ausgebildet und vorgesehen ist, Diagnosemeldungen von dem Operator Station Server (2) zu empfangen und diese einem Operator der technischen Anlage darzubieten.
